# EUROPEAN PATENT APPLICATION

(11) **EP 4 432 264 A1**
(43) Date of publication of application: **18.09.2024**
(21) Application number: 23162667.2
(22) Date of filing: 17.03.2023
(51) Int. Cl.: G08G 3/02

(54) **IMPROVING SAFETY FOR VESSELS TRAVELLING ALONG A ROUTE**

(71) Applicant: ABB SCHWEIZ AG, 5400 Baden (CH)
(72) Inventor: LINDER, Jonas, 464 93 Mellerud (SE); TERVO, Kalevi, 00980 Helsinki (FI)
(74) Representative: Kransell & Wennborg KB

(57) **Abstract**

The invention relates to a method of improving safety for vessels travelling along a route, a safety investigating arrangement as well as a first vessel comprising a safety investigating device of the safety investigating arrangement. The safety investigating arrangement determines at least one occluded area (OA1, OA2) in a body of water travelled by a first vessel (22), which occluded area (OA1, OA2) is located beside a current route (CUR) used by the first vessel (22), determines a risk zone (RZ) in the body of water adjacent the occluded area (OA1), investigates a probability of the first vessel entering the risk zone and colliding with an unknown vessel appearing from the occluded area (OA1) and determines a safety activity for mitigating the risk of collision.

## Description

### TECHNICAL FIELD

The invention relates to a method of improving safety for vessels travelling along a route, a safety investigating device as well as a first vessel comprising a safety investigating device.

### BACKGROUND

Safe navigation of a vessel in busy areas, such as archipelagos, ports or rivers, is a challenging task due to the dynamics of the vessel, environmental forces and interaction with other vessels in the area. Modern aids, such as radar and AIS (Automatic Identification System), help crews to detect and, to some extent, predict the behaviour of larger vessels. However, small ships and leisure crafts is not required to use AIS and are thus more difficult to detect. This can be handled in open areas where the crew is able to observe the surroundings of the vessel.

When the other vessel is visible, it is also known to predict the probability of collision. EP2878528 does for instance describe the determining of the probability of a vessel colliding with a visible object.

However, in areas with occlusions, unknown vessels can appear in collision course with very short notice which makes it difficult to act in time and to make an avoiding manoeuvre that is safe. The occlusions might be due to human built structures or natural obstructions, such as islands, rock formations, weather phenomena, etc. The occlusion could also be due to a technical fault which means that there is also limited perception. The problem is amplified by the slow dynamics of the vessel which in many instances require swift action to avoid an incident. This requires the crew to be conservative which cost time and if the concentration laps, incidents or accidents might occur.

There is thus a need for improvement of the safety.

### SUMMARY

One object of the invention is therefore to improve the safety when there is an occluded area in of a body of water along a route travelled by a vessel.

This object is according to a first aspect achieved through a method for improving safety for vessels travelling along a route, the method being performed by a safety investigating arrangement and comprising: determining at least one occluded area in a body of water being travelled by a first vessel, which occluded area is located beside a current route used by the first vessel,
determining a risk zone in the body of water adjacent the occluded area, investigating a probability of the first vessel entering the risk zone and colliding with an unknown vessel appearing from the occluded area, and determining a safety activity for mitigating the risk of collision.

The object is according to a second aspect achieved through a safety investigating arrangement comprising at least one processor operative to: determine at least one occluded area in a body of water travelled by a first vessel, which occluded area is located beside a current route used by the first vessel,
determine a risk zone in the body of water adjacent the occluded area, investigate a probability of the first vessel entering the risk zone and colliding with an unknown vessel appearing from the occluded area, and determine a safety activity for mitigating the risk of collision.

The object is according to a third aspect achieved through a first vessel comprising a safety investigating device of a safety investigating arrangement according to the second aspect.

The first vessel may additionally comprise at least one sensor for allowing the at least one occluded area to be determined based on sensor measurements.

The first vessel may additionally comprise a route planning unit and/or a collision risk mitigating unit operable to act on the determined safety activity.

According to one variation of the first aspect, the investigating of the probability of the first vessel entering the risk zone and colliding with an unknown vessel comprises determining a worst-case scenario for a virtual vessel to appear from the occluded area and cross the current route within the shortest possible distance from the first vessel at a future point in time.

According to a corresponding variation of the second aspect, the at least one processor when investigating the probability of the first vessel entering the risk zone and colliding with an unknown vessel is further operative to determine a worst-case scenario for a virtual vessel to appear from the occluded area and cross the current route within the shortest possible distance from the first vessel at a future point in time.

The first vessel may have a current position being occupied at a current point in time and the future point in time may be a time that is the closest possible time to the current point time.

The shortest possible distance may be the distance between the current position and a point of crossing the current route by the virtual vessel. The investigating of the probability of the first vessel entering the risk zone and colliding with an unknown vessel may additionally be based on a current speed of the first vessel at the current position and current point in time.

The investigating may additionally be based on a current heading of the first vessel.

The determining of the safety activity may additional comprise determining a change of speed, heading, position and/or route for mitigating the risk of the imaginary collision.

The determining of the safety activity may be complemented by the determining of a latest point in time for the safety activity to be initiated.

The determining of a safety activity may additionally comprise determining a safety activity that also mitigates the risk of collision with real vessels that can be detected at the first vessel.

The occluded area may be determined based on maps, visual data, such as lidar, radar or cameras, and/or a vessel tracking system, such as AIS, where AIS is an acronym for Automatic Identification System.

The occluded area and the risk zone possibly together with suggestions about at least one safety activity may additionally be displayed on a bridge of the first vessel in order to allow a crew of the first vessel to make informed decisions.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing a safety investigating device,
fig. 2 shows a computer program product in the form of a CD ROM with computer program code used to implement the safety investigating device,
fig. 3 schematically shows a first vessel comprising the safety investigating device,
fig. 4 schematically shows the safety investigating device communicating with a safety investigating server via a communication network,
fig. 5 schematically shows a nautical chart with the first vessel travelling along a current route along which there are occluded areas from which unknown vessels may appear, and
fig. 6 shows a flow chart of a number of method steps in an embodiment of a method of improving safety for vessels.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

Aspects of the present disclosure are directed towards a safety investigating arrangement implementing a safety investigating function, where the safety investigating arrangement comprises a safety investigating device.

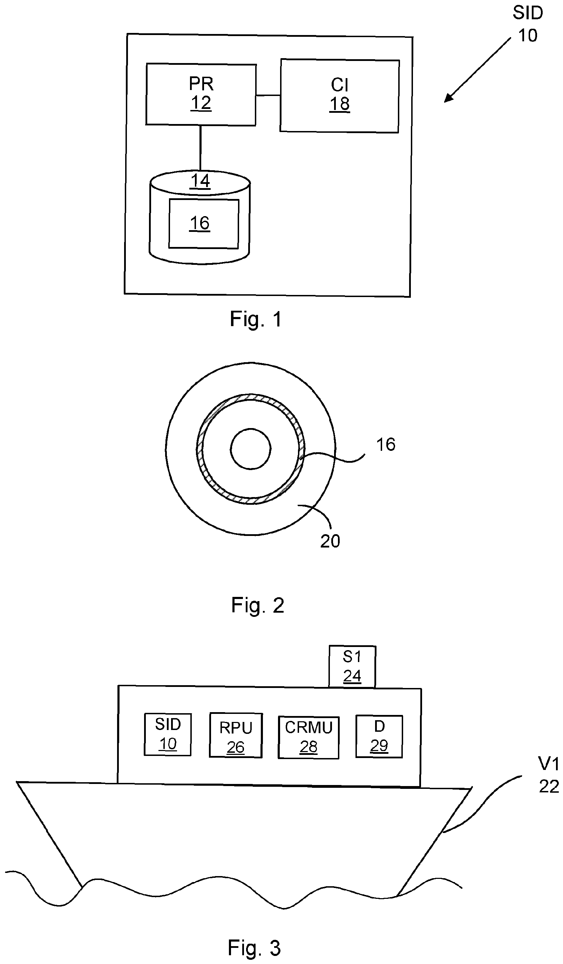

Fig. 1 schematically shows one realization of the safety investigating device SID 10. In the present example, the safety investigating device 10 comprises a processor PR 12 and a data storage 14 with computer program instructions 16 that, when executed by the processor 12, implements at least a part of the safety investigating function. There is also a communication interface CI 18. The communication interface 18 may comprise a computer communication section, which in turn may be an Ethernet interface for connection to a local area network (LAN) for instance a LAN provided in a vessel. It should be realized that it is possible that the communication interface 18 also comprises a radio communication section with a transceiver for wireless communication.

The safety investigating device 10 may thus comprise a processor 12 with associated program memory 14 including computer program code 16 for implementing said at least a part of the safety investigating function.

A computer program may also be provided via a computer program product, for instance in the form of a computer readable storage medium or data carrier, like a CD ROM or a memory stick, carrying such a computer program with the computer program code, which will implement the at least one part of the safety investigating function when being loaded into a processor. One such computer program product in the form of a CD ROM 20 with the above-mentioned computer program code 16 is schematically shown in fig. 2.

The safety investigating device 10 may with advantage be provided in a first vessel.

Fig. 3 schematically shows a first vessel V1 22 comprising the safety investigating device SID 10. The first vessel 22 may additionally comprise at least one sensor. In the example in fig. 3, the first vessel 22 only comprises a first sensor S1 24. It also comprises a route planning unit RPU 26, a collision risk mitigating unit CRMU 28 and a display 29. Both the route planning unit 26 and the collision risk mitigating unit 28 may be realized in the same way as the safety investigating device 10, i.e. a through a processor operating on software in a memory. One or more of the units may be provided through the same processor and memory as the safety investigating device 10. Alternatively, one or more of the units may be provided through a separate processor/memory combination. There may also be variations of these two extremes. Memories may be shared but not processors and vice versa. The different elements may additionally be interconnected using a LAN.

The first sensor 24 may be a sensor sensing the surroundings of the first vessel 22, such as a radar, a lidar and/or a camera. It is also possible that the first vessel 22 is equipped with a vessel tracking system, such as AIS, where AIS is an acronym for Automatic Identification System. In this case the first sensor 24 may comprise an AIS transponder.

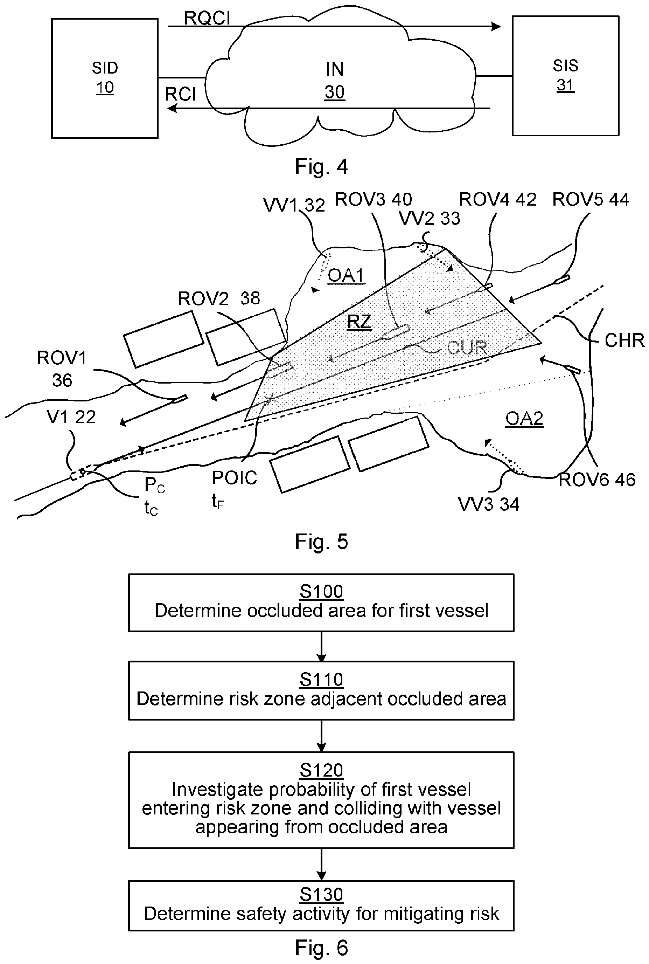

As can be seen above the safety investigating device SID 10 may comprise a computer communication interface. In some variations, this interface may be used for communication with a safety investigating server, which may be a server located in the cloud or on a local network. Fig. 4 schematically shows the safety investigating device SID 10 communicating with the safety investigating server SIS 31 via a communication network such as the Internet IN 30. It should be realized that other networks could also be used. The safety investigating device 10 is more particularly shown as sending a request for a collision investigation RQCI to the safety investigating server 31 and receiving a collision investigating response RCI from the safety investigating server 31.

In some variations the safety investigating device and the safety investigating server together make up the safety investigating arrangement. In this case at least a part of the safety investigating function may be implemented by the safety investigating server 31. In other variations only the safety investigating device 10 forms the safety investigating arrangement.

Fig. 5 shows a nautical chart of a fairway, along which the first vessel 22 is passing, which nautical chart is helpful for understanding the safety investigating function.

In the nautical chart, the first vessel 22 is shown as occupying a current position Pc at a current point in time tc. The first vessel 22 is more particularly shown as following a current route CUR in the fairway. Furthermore, in the fairway there is also a first real other vessel ROV1 36, a second real other vessel ROV2 38, a third real other vessel ROV3 40, a fourth real other vessel ROV4 42, a fifth real other vessel ROV5 44 and a sixth real other vessel ROV6 46, where the first, second, third, fourth and fifth real other vessels 36, 38, 40, 42, 44 pass, one after the other, along the fairway in the opposite direction of the first vessel 22. More particularly, they pass on the port side of the first vessel 22. The sixth other vessel 46 in turn emerges from a bay and will at one point cross the fairway and the current route CUR of the first vessel 22. Along the sides of the fairway there are also obstacles in the form of buildings, where a first and a second building are located on land on the port side of the first vessel 22 and a third and a fourth building are located on land on the starboard side of the first vessel 22. Beside the first and second buildings along the fairway there is a first small bay and beside the second and third building along the fairway there is second bay. Thereby the fairway passes between the first and the second bay.

In the first bay there is also indicated a first occluded area OA1 and in the second bay there is indicated a second occluded area OA2. Furthermore, in the nautical chart there is shown a first virtual vessel VV1 32 in the first occluded area OA1, which first virtual vessel 32 will cross the current route CUR of the first vessel 22 at a point of imaginary crossing POIC and at a future point in time t_{F}. There is also a second virtual vessel W2 33 also in the first occluded area OA1, which will cross the current route CUR of the first vessel 22 at a distance from the point of imaginary crossing away from the first vessel 22 and at second later point in time. There is also a third virtual vessel VV3 34 that is in the second occluded area OA2 and will cross the current route CUR at a point in time between the two previously mentioned points in time and between the two positions. There is also shown a risk zone RZ adjacent the first occludes area OA1. As can be seen the current route passes through the risk zone RZ. In addition there is shown a changed route CHR for the first vessel starting at the current position Pc and current point in time t_{c}.

As opposed to the real other vessels 36, 38, 40, 44, the virtual vessels 32, 33, 34 are not real but imaginary and only provided for assessing the risk of collisions.

In fig. 5 the speed and heading of the vessels is also shown using vectors, where the angle of the vector indicates the heading and the magnitude the speed.

In fig. 5 the real other vessels 36, 38, 40, 42, 44, 46 and their associated vectors are all shown with solid lines, while the virtual vessels 32, 33, 34 and their associated vectors are shown with dotted lines. The first vessel 22 is in turn shown with dashed lines, while its vector is solid. The changed route CHR is also indicated with dashed lines, while the current route CUR is shown with a solid line.

Safe navigation of a vessel in busy areas, such as archipelagos, ports or rivers, is a challenging task due to the dynamics of the vessel, environmental forces and interaction with other vessels in the area. Modern aids, such as radar and AIS, help crews to detect and predict the behavior of larger vessels. Examples of this in fig. 5 are the second and third other vessels 38, 40. However, small ships and leisure crafts are not required to use AIS and are thus more difficult to detect. This can be handled in open areas where the crew is able to observe the surroundings of the vessel and where such vessels can also be detected with radar and/or lidar. The first, fourth, fifth and sixth real other vessels 36, 42, 44, 46 are examples on such visible vessels without AIS. However, in areas with occlusions, such as the first and the second occluded area OA1, OA2, unknown vessels can appear in collision course with very short notice, which makes it difficult to act in time and to make an avoiding maneuver that is safe. The occlusions might be due to human built structures, such as the buildings in fig. 5, or natural obstructions, such as islands, rock formations, weather phenomena, etc. The occlusion could also be due to a technical fault which means that there is also limited perception. The problem is amplified by the slow dynamics of the first vessel 22, which in many instances require a swift action to avoid an incident. This requires the crew to be conservative which cost time and if the concentration laps, incidents or accidents might occur.

There is therefore a need for improving the safety in situations, such as the situation depicted in fig. 5.

How this may be done will now be described with reference also being made to fig. 6, which shows a flow chart of a number of method steps in an embodiment of a method of improving safety for vessels, which method is carried out by the safety investigating function of the safety investigating arrangement. In the example given below it is completely carried out by the safety investigating device.

The safety investigating function may initially determine at least one occluded area in the body of water being travelled by the first vessel 10, S100, which occluded area OA1, OA2 is located beside the current route CUR used by the first vessel 22. It may also be beside or adjacent the fairway. The at least one occluded area may additionally be an occluded area ahead of the first vessel 22, such as an area ahead of the stem of the first vessel.

The safety investigating function may be provided with nautical charts and maps of the environment around the current route CUR ahead of the first vessel 22. From these it is possible to determine if there are bays and/or other types of hidden water ahead of the first vessel 22. From such maps and charts it is also possible to obtain information about objects, such as rocks and cliffs as well as their height and perhaps also of the presence of buildings and their height. Based on such information and knowledge about the construction of the ship, such as its height, the possible location of a bridge and the draught during the passage, it is then possible to determine if there is any occluding area in the body of water, and if there is, where such an occluded area is located. It is also possible to consider visual information captured by the at least one sensor 24. The provision of the at least one sensor 24 may thus allow the at least one occluded area to be determined also based on sensor measurements. The safety investigating device 10 may for this reason be supplied with sensor measurements from the at least one sensor 24, like lidar or radar echoes, camera images and AIS messages. For instance, captured images or video from the first vessel 22 may together with the map information be used to safely determine the parts of the body of water that are occluded. Lidar and/radar may in turn give information about objects such as islands Also AIS can be used. If for instance a real other vessel equipped with AIS reports a position that cannot be observed from the first vessel 22, even though it is close enough so that it should be visible, this position may be determined to be in an occluded area.

The occluded areas OA1, OA2 may thus be determined based on maps, visual data, such as lidar, radar or cameras, and/or a vessel tracking system, such as AIS.

As an example, the first occluded area OA1 and the second occluded area OA2 are determined as being occluded by the safety investigating device 10. It can be seen in fig. 5 that parts of the two bays are in fact visible. It can for instance be seen that the sixth real other vessel 46 is one such vessel that is visible while still being in the second bay. This vessel may thereby be detected even if it does not use AIS.

Furthermore, the occluded areas are determined dynamically. The size and shapes change as the first vessel moves and more or less of the areas become visible.

After having determined the occluded areas OA1, OA2, the safety investigating function of the safety investigating device 10 continues and determines a risk zone in the body of water adjacent the occluded area, S110. One such risk zone RZ for the first occluded area OA1 is shown in fig. 5.

The forming of the risk zone RZ may be made based on a number of virtual vessels having a number of speeds and headings leaving the occluded area and crossing the current route. As an example, the first and the second virtual vessels 32, 33 are shown as providing the risk zone RZ adjacent the first occluded area OA1. It can also be seen that the current route CUR passes through the risk zone RZ. The risk zone RZ may be the largest possible zone in which there can be a risk for collision given the current speed and heading of the first vessel 22.

Alternatively, the risk zone RZ may be determined based on the geometry of the occluded area rather than on virtual vessels. The extent of the area may be based on a theoretical maximum speed that a vessel could have in the occluded area.

The safety investigating function then investigates a probability of the first vessel 22 entering the risk zone RZ and colliding with an unknown vessel that appears from the occluded area, S120. Here the first and second virtual vessels 32, 33 are examples of such unknown vessels appearing from the first occluded area OA1.

The investigation of the risk of collision may be based on a current speed of the first vessel 22 at the current position Pc at the current point in time tc as well as the current heading of the first vessel 22. It may also consider the possible speeds and headings of virtual vessels. There may then be deemed to be a risk for collision if the first vessel will not be able to avoid a collision in the risk zone RZ with the current speed and heading.

It is additionally possible that the investigation involves a determination of a worst-case scenario.

In this worst-case scenario, the safety investigating function may generate a virtual vessel in an occluded area, where the virtual vessel of the occluded area is provided with a heading such that it will cross the current route CUR of the first vessel 22. It may also be provided with a highest possible speed. The highest possible speed may be set as the highest possible speed that a vessel lacking AIS can have.

The safety investigating function may more particularly set the virtual vessel to be crossing the current route CUR within the shortest possible distance from the first vessel 22 at a future point in time of the imaginary route crossing.

The shortest possible distance may be the distance between the current position Pc of the first vessel 22 and the point of imaginary crossing POIC of the current route CUR by the virtual vessel 32. The point of the imaginary crossing POIC may be selected to be the closest possible point to the current position Pc of the first vessel that can be reached from the occluded area at the future time t_{F}, where the future time t_{F} is the closest possible time to the current time tc. This point of imaginary crossing POIC may the point that is the hardest for the first vessel 22 to avoid using the current route CUR and may also be deemed to be a worst case.

In the example of fig. 5 the first virtual vessel 32 is such a virtual vessel of a worst-case scenario. The first virtual vessel 32 is in this case generated such that it will cross the current route CUR at the point of imaginary collision POIC at the future time t_{F}, which is a time that is later than the current time tc.

There may in this case be deemed to be a risk for collision with the first virtual vessel 32 if at least a part of the first vessel 22 will occupy the point of imaginary collision POIC at the future time t_{F} using the current speed and heading of the first vessel 22.

It should here be realized that it is possible to determine a risk zone also for the second occluded area OA2 as well as to determine a worst-case scenario, for instance using the third virtual vessel 34.

If there is a risk for collision, the safety investigating function may continue and determine a safety activity for mitigating the risk of collision, S130.

This safety activity may be an activity in the group of changing of speed, changing the heading, changing position and/or changing route for mitigating the risk of collision. The determining of the safety activity may be complemented by the determining of a latest point in time for the safety activity to be initiated.

In the example of fig. 5 it can be seen that there is a changed route CHR which will avoid the point of imaginary collision POIC at the future point in time t_{F}.

After the safety activity has been determined, it may then be presented to a at least one crew member of the first vessel 22. This may be done using the display 29. The display 29 may be provided on a bridge of the first vessel 22 and may also be part of an advisory system that aids the crew in the maneuvering to avoid potentially dangerous situations, for instance, by showing blind spots overlayed on the digital nautical charts and by suggesting changes in the current route to get into a safer state. It is thereby also possible to display a chart of the fairway where the occluded areas and possibly also the risk zones are highlighted. The displaying may additionally comprise a displaying of suggestions of safety activities that mitigate the risk for collision. The crew can then be allowed to decide where there is a risk and if the suggestion is to be followed or if the occluded area s and risk zones pose no problem. The occluded areas and the risk zones possibly together with suggestions about at least one safety activity may thereby be displayed, for instance on the bridge of the first vessel 22, in order to allow the crew of the first vessel to make informed decisions.

Alternatively or instead, the determined safety activity may be provided to the route planning unit 26 for the route planning unit 26 to act on it, which acting may involve planning a changed route CHR for the first vessel 22. Alternatively or instead, the determined safety activity may be provided to the collision risk mitigating unit 28 for the collision risk mitigating unit 28 to act on it. The acting may involve the collision risk mitigating unit 28 using the determined safety activity in controlling the first vessel 22. The collision risk mitigating unit 28 may for instance prepare a safe emergency action to avoid a potential incident. The emergency maneuver could for instance be found using optimization, machine learning or other suitable methods. This may be done through the collision risk mitigating unit 28 supplying a control command to an engine and/or a rudder of the first vessel 22 adjusting the speed and/or the heading of the first vessel 22.

The determined safety activity may also be a safety activity that also mitigates the risk of or avoids collision with real vessels that can be detected at the first vessel 22. In the example of fig. 5, this may involve making a starboard turn instead of a port turn so that the paths of the first, second, third, fourth and fifth real other vessels 36, 38, 40, 42, 44 are not crossed.

Aspects of the present disclosure are directed towards a system that anticipates potential vessels appearing from occluded areas and adapt the behavior of the first vessel (modifying speed, position, heading or path).

The selected areas can be removed by a human operator if applicable. The identified areas are then used to adapt the behavior, for instance, by looking at the size of the area and finding one or several worst-case scenarios that is then used to replan the route of the first vessel. The areas should be continuously updated to reflect new information from the ship's position change. The strategy could then be applied to automatic/autonomous control, collision aware planning, showing advise to the crew for action by highlighting areas of the digital nautical charts and suggesting setpoints for heading and speed, or similar.

The invention may be varied in a number of ways.

As was mentioned above, the safety investigation function may be provided wholly in the safety investigating device. However, it should be realized that all or a part of it may instead be provided in the safety investigating server. One or more of the method steps may thus be performed in the safety investigating server instead of in the safety investigating device. It is thus possible that one or more of the determining of the occluded area, the determining of the risk zone, the investigating of the probability of the first vessel entering the risk zone and colliding with an unknown vessel and the determining of the safety activity are performed in the safety investigating server instead. In this case it may be necessary for the safety investigating device to send data about the position, heading and speed as well as possibly also sensor measurements of the first sensor to the safety investigating server.

Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for improving safety for vessels travelling along a route, the method being performed by a safety investigating arrangement (10; 10, 31) and comprising:
determining (S100) at least one occluded area (OA1, OA2) in a body of water being travelled by a first vessel (10), which occluded area (OA1, OA2) is located beside a current route (CUR) used by the first vessel (22),
determining (S110) a risk zone (RZ) in the body of water adjacent the occluded area (OA1),
investigating (S120) the probability of the first vessel entering the risk zone and colliding with an unknown vessel appearing from the occluded area (OA1, OA2), and
determining (S130) a safety activity for mitigating the risk of collision.

2. The method as claimed in claim 1, wherein the investigating of the probability of the first vessel entering the risk zone and colliding with an unknown vessel comprises determining a worst-case scenario for a virtual vessel (32) to appear from the occluded area (OA1) and cross (POIC) the current route (CUR) within the shortest possible distance from the first vessel (22) at a future point in time (t_{F}).

3. The method according to claim 1 or 2, wherein the probability of the first vessel entering the risk zone and colliding with an unknown is determined based on a current speed of the first vessel (22) at a current position (Pc) and a current point in time (tc).

4. The method as claimed in any previous claim, wherein the determining of the safety activity comprises determining a change of speed, heading, position and/or route (CHR) for mitigating the risk of collision.

5. The method as claimed in any previous claim, further comprising presenting the determined safety activity to at least one crew member of the first vessel (22), planning a changed route (CUR) based on the determined safety activity and/or controlling the first vessel (22) to perform the determined safety activity.

6. The method according to any previous claim, wherein the determining of the safety activity comprises determining a safety activity that also mitigates the risk of collision with real vessels (36, 38, 40, 42, 44, 46) that can be detected at the first vessel (22).

7. The method as claimed in any previous claim, wherein the occluded area (OA1) is determined based on maps, visual data, such as lidar, radar or cameras, and/or a vessel tracking system, such as AIS.

8. A safety investigating arrangement (10; 10, 31) comprising at least one processor (12) operative to:
determine at least one occluded area (OA1, OA2) in a body of water travelled by a first vessel (22), which occluded area (OA1, OA2) is located beside a current route (CUR) used by the first vessel (22),
determine a risk zone (RZ) in the body of water adjacent the occluded area (OA1),
investigate a probability of the first vessel entering the risk zone and
colliding with an unknown vessel appearing from the occluded area (OA1), and
determine a safety activity for mitigating the risk of collision.

9. The safety investigating arrangement (10; 10, 31) as claimed in claim 8, wherein the at least one processor (12) when investigating the probability of the first vessel entering the risk zone and colliding with an unknown vessel is further operative to determine a worst-case scenario for a virtual vessel (32) to appear from the occluded area (OA1) and cross (POIC) the current route (CUR) within the shortest possible distance from the first vessel (22) at a future point in time (t_{F}).

10. The safety investigating arrangement (10; 10, 31) according to claim 8 or 9, wherein the investigating of the probability of the first vessel entering the risk zone and colliding with an unknown vessel is based on a current speed of the first vessel (22) at a current position (Pc) and a current point in time (tc).

11. The safety investigating arrangement (10; 10, 31) according to any of claims 8 - 10, wherein the determining of a safety activity comprises determining a change of speed, heading, position and/or route (CHR) for mitigating the risk of collision.

12. The safety investigating arrangement according to any of claims 8 - 11, wherein the determining of a safety activity comprises determining a safety activity that also mitigates the risk of collision with real vessels (36, 38, 40, 42, 44, 46) that can be detected at the first vessel (22).

13. A first vessel (22) comprising a safety investigating device (10) of a safety investigating arrangement (10; 10, 31) according to any of claims 8 - 12.

14. The first vessel (22) according to claim 13, further comprising at least one sensor (24) for allowing the at least one occluded area (OA1, OA2) to be determined based on sensor measurements.

15. The first vessel (22) according to claim 13 or 14, further comprising a route planning unit (26) and/or a collision risk mitigating unit (28) operable to act on the determined safety activity.
